# EUROPEAN PATENT SPECIFICATION

(11) **EP 4 289 589 B1**
(45) Date of publication and mention of the grant of the patent: **22.04.2026**
(21) Application number: 23178701.1
(22) Date of filing: 12.06.2023
(51) Int. Cl.: B29C 35/02, B29C 49/64, B64D 15/12, B64D 29/00, F01D 21/04, F02C 7/04, F02C 7/047, H05B 3/26, H05B 3/34, B29C 70/88, B29C 70/44, B29B 11/16, B29C 35/08, B64C 7/02, B64D 45/02, B64D 33/02

(54) **CURING THERMOSET MATERIAL USING ELECTRIC HEATER(S) FOR THERMAL ANTI-ICING SYSTEM**
HÄRTUNG VON WÄRMEHÄRTBAREM MATERIAL UNTER VERWENDUNG VON ELEKTRISCHEN HEIZERN FÜR THERMISCHES FROSTSCHUTZSYSTEM
DURCISSEMENT DE MATÉRIAU THERMODURCI UTILISANT UN OU DES DISPOSITIFS DE CHAUFFAGE ÉLECTRIQUE POUR SYSTÈME D'ANTIGIVRAGE THERMIQUE

(30) Priority: 10.06.2022 US 202263351127 P
(43) Date of publication of application: 13.12.2023
(73) Proprietor: Rohr, Inc., Chula Vista, CA 91910-2098 (US)
(72) Inventor: DAVIS, Jennifer, Carlsbad, 92009 (US)
(74) Representative: Dehns

(56) References cited:
- EP-A1- 1 200 308
- US-A1- 2009 107 620
- US-A1- 2017 238 367
- US-A1- 2019 322 375
- US-A1- 2020 269 526
- US-A1- 2021 162 635
- US-A1- 2022 032 563

## Description

### BACKGROUND

### 1. Technical Field

This disclosure relates generally to an aircraft and, more particularly, to forming a composite component for the aircraft.

### 2. Background Information

An aircraft may include various thermoset composite components. Various methods are known in the art for forming such composite aircraft components. While these known formation methods have various advantages, there is still room in the art for improvement. There is a need in the art, for example, for methods for forming thermoset composite aircraft components using simpler, less expensive consolidation setups.

US 2009/107620 A1 discloses a prior art manufacturing method for composite material structural component for aircraft and its structural component.

US 2019/322375 A1 discloses a prior art composite aerostructure with integrated heating element.

US 2021/162635 A1 discloses a prior art method and apparatus for cuing a composite article.

EP 1 200 308 A1 discloses a prior art zoned aircraft de-icing system and method.

US 2020/269526 discloses a prior art electrothermal heater mat.

US 2022/032563 discloses a prior art device and method for rapid manufacturing of multifunctional composites.

US 2017/238367 discloses a prior art integrated conductive foam core for composite processing.

### SUMMARY OF THE DISCLOSURE

According to an aspect of the present disclosure, there is provided a method as recited in claim 1.

Features of embodiments are set forth in the dependent claims.

The foregoing features and the operation of the invention will become more apparent in light of the following description and the accompanying drawings.

### BRIEF DESCRIPTION OF THE DRAWINGS

FIG. 1 is a schematic illustration of an assembly for an aircraft with a composite aircraft component and a thermal anti-icing system.
FIG. 2 is a perspective illustration of the aircraft.
FIGS. 3A-C are partial schematic sectional illustrations of the aircraft component with various different layer configurations.
FIGS. 4A and 4B are partial schematic illustrations of an electric heater with various heating element arrangements.
FIG. 5 is a flow diagram of a method for forming the aircraft component.
FIGS. 6A-C are partial schematic sectional illustrations of a composite preform arranged with tooling.
FIG. 7 is a schematic illustration of the composite preform pressed between the tooling and a vacuum bag during consolidation.
FIG. 8 is a schematic illustration of the aircraft component / the composite preform with multiple electric heaters.
FIG. 9 is a schematic illustration of the aircraft component / the composite preform with one or more internal sensors.
FIGS. 10A-C are schematic illustrations depicting repair of the aircraft component.

### DETAILED DESCRIPTION

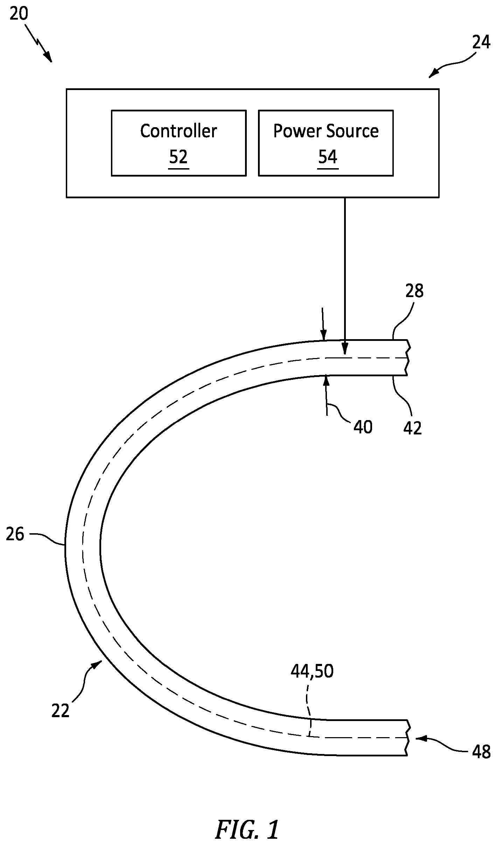

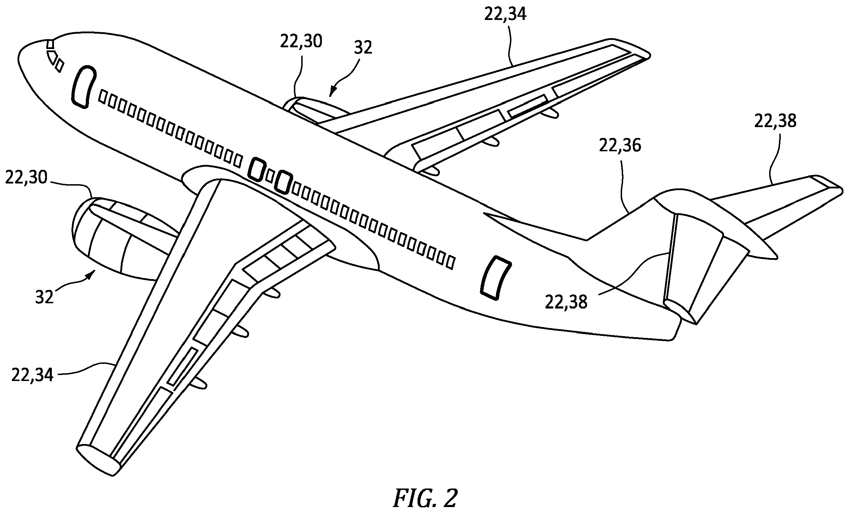

FIG. 1 illustrates an assembly 20 for an aircraft. The aircraft may be configured as an airplane, a helicopter, a drone (e.g., an unmanned aerial vehicle (UAV)), a spacecraft or any other manned or unmanned aerial vehicle. However, for ease of description, the aircraft is described below and illustrated in FIG. 2 as the airplane. The aircraft assembly 20 of FIG. 1 includes a composite aircraft component 22 and a thermal anti-icing system 24.

The aircraft component 22 may be configured as any component of the aircraft with a leading edge 26 and/or at least one aerodynamic exterior surface 28. For example, referring to FIG. 2, the aircraft component 22 may be configured as or included as part of an inlet structure 30 of nacelle for an aircraft propulsion system 32; e.g., an inlet structure noselip. The aircraft component 22 may alternatively be configured as or included as part of an airfoil such as, but not limited to, a wing 34 for the aircraft, a vertical stabilizer 36 for the aircraft, or a horizonal stabilizer 38 for the aircraft. Another example of the airfoil is an inlet guide vane for the aircraft propulsion system. The aircraft component 22, however, is not limited to the foregoing exemplary component configurations.

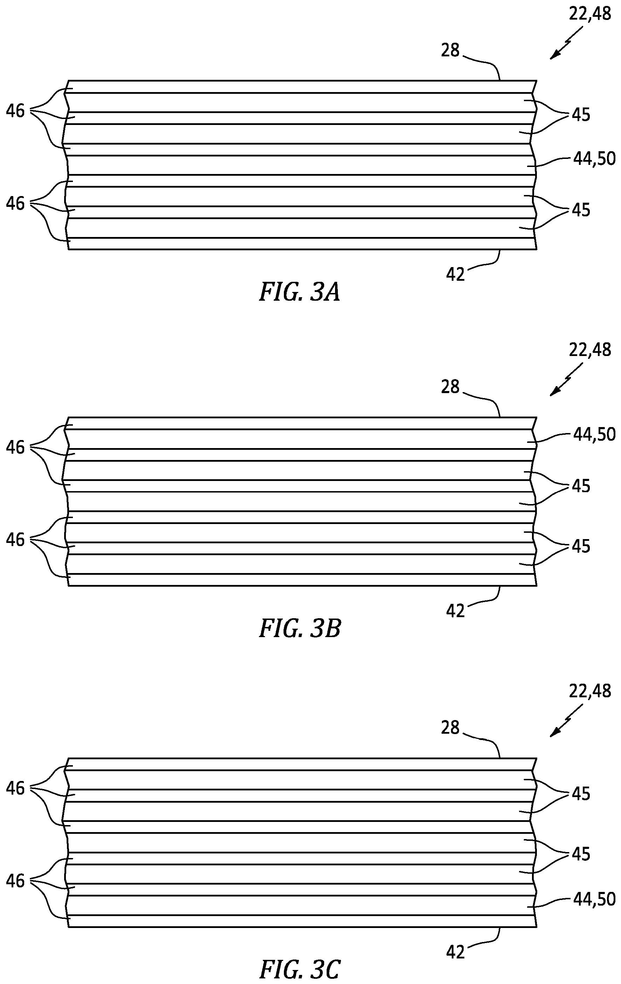

The aircraft component 22 of FIG. 1 extends longitudinally (e.g., axially along an axial centerline and/or lengthwise along an airfoil camber line) to the component leading edge 26. The aircraft component 22 has a thickness 40 that extends laterally between and to an interior surface 42 of the aircraft component 22 and the component exterior surface 28. The aircraft component 22 of FIGS. 3A-C includes at least one electric heater 44, fiber-reinforcement 45 and cured thermoset material 46. The electric heater 44 and the fiber-reinforcement 45 are embedded within the cured thermoset material 46, where the component elements 44-46 collectively form a body 48 (e.g., a skin, a wall, etc.) of the aircraft component 22.

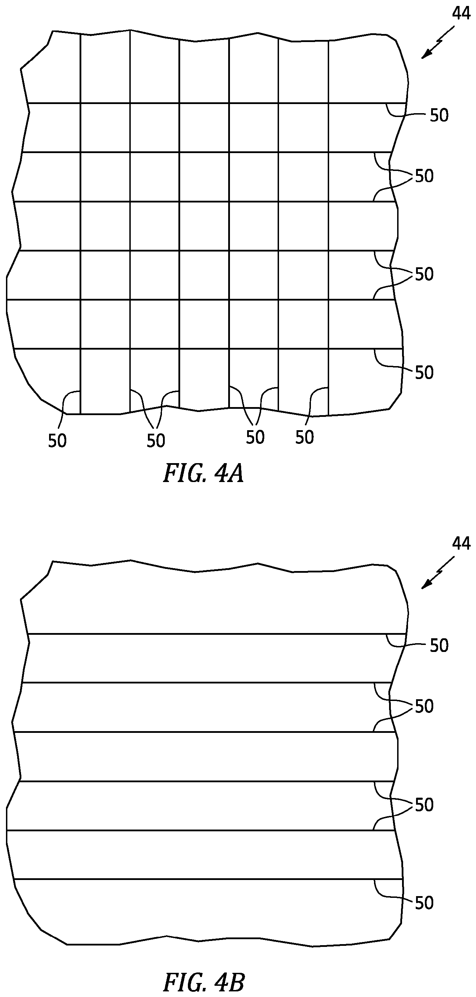

Referring to FIGS. 4A and 4B, the electric heater 44 includes one or more electric heating elements 50 arranged in a grid (e.g., see FIG. 4A), an array (e.g., see FIG. 4B) or any other arrangement. The heating elements 50 may be electrically interconnected to provide a single heating zone across / along the aircraft component 22 and its elements 26 and 28 (see FIG. 1). Alternatively, the heating elements 50 may be configured to provide multiple discrete heating zones across / along the aircraft component 22 and its elements 26 and 28 (see FIG. 1). Each of the heating elements 50 may be configured as an electric carbon nanotube heater. One or more or all of the heating elements 50, however, may alternatively be configured as another type of electrically resistive heating element such as a resistive metal heating wire.

Referring to FIGS. 3A-C, the electric heater 44 and its heating elements 50 are thermally coupled with the component exterior surface 28 through at least the cured thermoset material 46. Referring to FIG. 3A, the electric heater 44 and its heating elements 50 may be arranged (e.g., sandwiched) laterally between multiple layers of the fiber-reinforcement 45. The electric heater 44 may thereby be disposed intermediately (e.g., midway) between the component interior surface 42 and the component exterior surface 28. Alternatively, referring to FIG. 3B, the electric heater 44 and its heating elements 50 may be arranged adjacent (or otherwise at) the component exterior surface 28. Still alternatively, referring to FIG. 3C, the electric heater 44 and its heating elements 50 may be arranged adjacent (or otherwise at) the component interior surface 42. The heating elements 50, of course, may also be located at multiple different lateral locations within the component body 48 between the component interior surface 42 and the component exterior surface 28 to provide a multi-layer heater arrangement.

The fiber-reinforcement 45 may be arranged into the one or more reinforcement layers. Each layer of the fiber-reinforcement 45 includes one or more long strand, short strand and/or chopped fibers. Prior to consolidation of the aircraft component 22, the fibers in each reinforcement layer may be woven into a weave or otherwise arranged together to provide a fiber-reinforcement cloth or mat. Examples of the fiber-reinforcement 45 include, but are not limited to, fiberglass material, carbon fiber material and aramid (e.g., Kevlar^{®}) material.

The cured thermoset material 46 provides a thermoset matrix into which the electric heater 44 and the fiber-reinforcement 45 are disposed; e.g., embedded, encapsulated, etc.

Referring to FIG. 1, the thermal anti-icing system 24 includes the at least one electric heater 44 that is part of and/or embedded within the aircraft component 22. The thermal anti-icing system 24 also include a controller 52 and an electrical power source 54; e.g., one or more batteries, a generator, etc. This thermal anti-icing system 24 is configured to melt and/or prevent ice accumulation on the component exterior surface 28, for example, at (e.g., on, adjacent or proximate) and along the component leading edge 26. The controller 52, for example, may signal the power source 54 (or a switch and/or other regulator between the power source 54 and the electric heater 44) to provide electricity to the electric heater 44. The electricity energizers the electric heater 44 and its heating elements 50, and the electric heater 44 generates heat energy. Referring to FIGS. 3A-C, the heat energy transfers (e.g., conducts) through at least the cured thermoset material 46 towards (e.g., to) the component exterior surface 28 thereby heating the component exterior surface 28 to an elevated temperature. This elevated temperature may be selected to be warm enough to melt any ice accumulating on the component exterior surface 28 and/or prevent accumulation of the ice on the component exterior surface 28, while cool enough so as not to damage the aircraft component 22 or any surrounding components and/or needlessly expend energy.

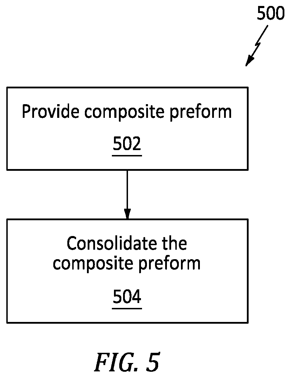

FIG. 5 is a flow diagram of a method 500 for forming a composite aircraft component with at least one internal electric heater. For ease of description, the method 500 is described below with respect to forming the aircraft component 22. The formation method 500 of the present disclosure, however, is not limited to such an exemplary aircraft component.

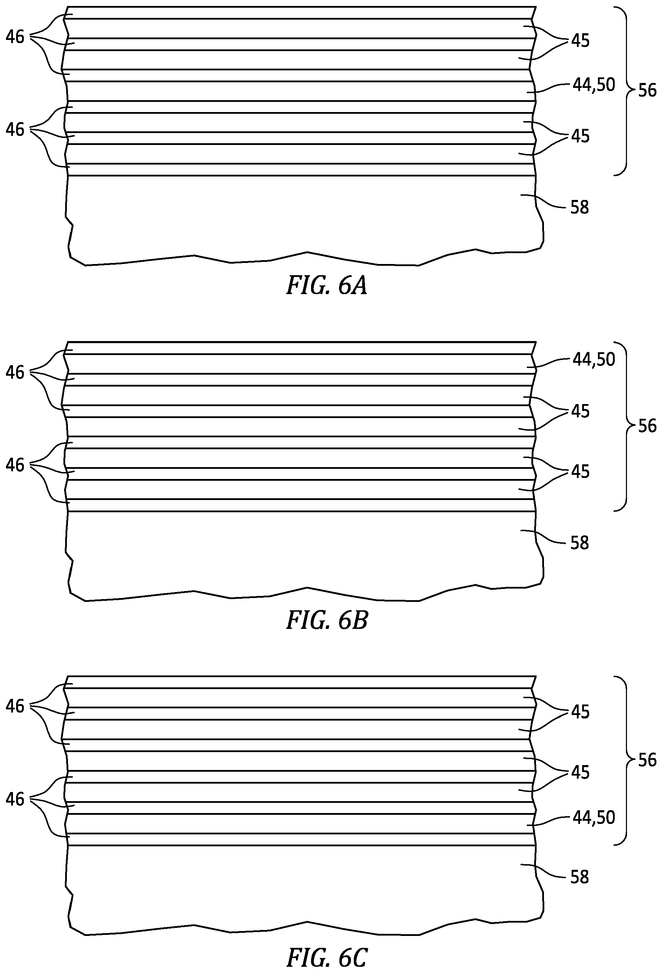

In step 502, a composite preform 56 of the aircraft component 22 is provided. This composite preform 56 may generally have the same shape and dimensions as the aircraft component 22 being formed. Referring to FIGS. 6A-C, the composite preform 56 includes the at least one electric heater 44 and the fiber-reinforcement 45. The composite preform 56 may also include the thermoset material 46' (in an uncured or partially cured state). The fiber-reinforcement 45 and at least some or all of the thermoset material 46', for example, may be provided together as one or more layers (e.g., sheets) of prepreg. The term "prepreg" may describe herein a sheet of fiber-reinforcement that is pre-impregnated with uncured or partially cured thermoset material. To form the composite preform 56, the electric heater 44 may be laid up with the prepreg layers against tooling 58; e.g., a die or other form. The electric heater 44 of FIG. 6A is laid up between the prepreg layers. The electric heater 44 of FIGS. 6B and 6C is laid up to a respective side of the prepreg layers.

The thermoset material 46' is described above as being included with the fiber-reinforcement 45 in the prepreg layers. Of course, various other techniques are known in the art for delivering thermoset material to a preform, and the present disclosure is not limited to any particular ones thereof.

In step 504, the composite preform 56 is consolidated to provide the aircraft component 22. During this consolidation, the composite preform 56 may be subjected to pressure and/or heat to bring together the preform elements 44-46' and cure the thermoset material 46'.

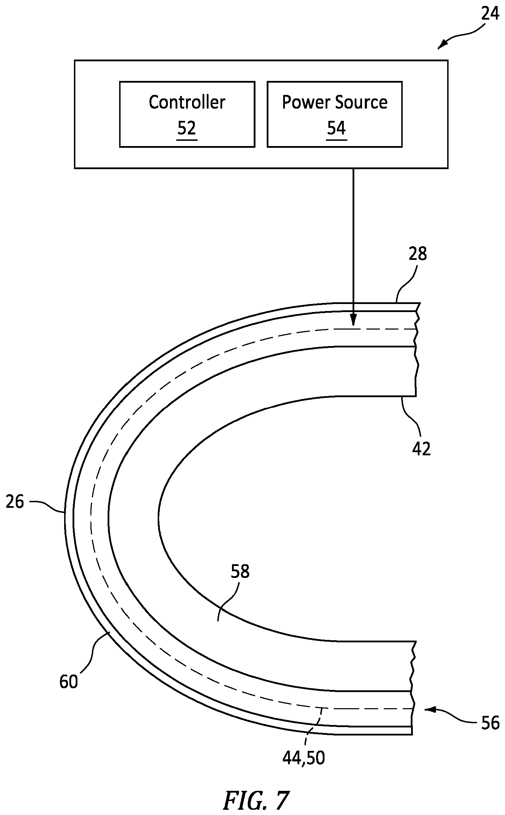

Referring to FIG. 7, pressure may be applied to the composite preform 56 using a vacuum bag 60 and the tooling 58. The composite preform 56 of FIG. 7, for example, is disposed between the vacuum bag 60 and the tooling 58 such that the vacuum bag 60 pushes the composite preform 56 against the tooling 58. Alternatively, the composite preform 56 may be pressed between opposing sets of tooling 58; e.g., an interior die and an exterior die. Of course, various other methods are known in the art for applying pressure to a preform, and the present disclosure is not limited to any particular ones thereof.

To heat the composite preform 56 and, more particularly, the uncured (or partially cured) thermoset material 46', at least (or only) the electric heater 44 is energized; e.g., turned on. This electric heater 44 may be energized by the thermal anti-icing system elements 52 and 54 or other similar elements, for example, dedicated to component forming. The electric heater 44 and its heating elements 50 thereby produce heat energy and heat up the surrounding material including the thermoset material 46'. The heat produced by the electric heater 44 and its heating elements 50 during this consolidation step 504 may be enough (or more than enough) to elevate the thermoset material 46' in the prepreg to or above its cure temperature. Of course, in other embodiments, additional heat may also be input from an external heating source (not shown); although, preferably such an external heating source is not required.

It should be noted, the heat energy generated by the electric heater 44 and its heating elements 50 during aircraft operation for thermal anti-icing may be (e.g., significantly) less than that during the consolidation step 504 so as to prevent thermal degradation of one or more other nearby aircraft components as well as prevent excess expenditure of energy. For example, during the consolidation, the electric heater 44 may be heated to a relatively high consolidation temperature whereas the electric heater 44 may be heated to a relatively low anti-icing temperature during aircraft operation. The consolidation temperature, of course, may vary depending upon the specific thermoset material 46, 46' included in the aircraft component 22.

By using the integral electric heater 44 for the consolidation step 504, no additional heater(s) (e.g., outside of the composite preform 56) are needed for forming the aircraft component 22. This may significantly reduce an initial setup cost for producing the aircraft components 22. Furthermore, the electric heater 44 can heat the thermoset material 46' with less interference (e.g., thermal resistance) than a heater external to the composite preform 56 and the tooling 58 / the vacuum bag 60.

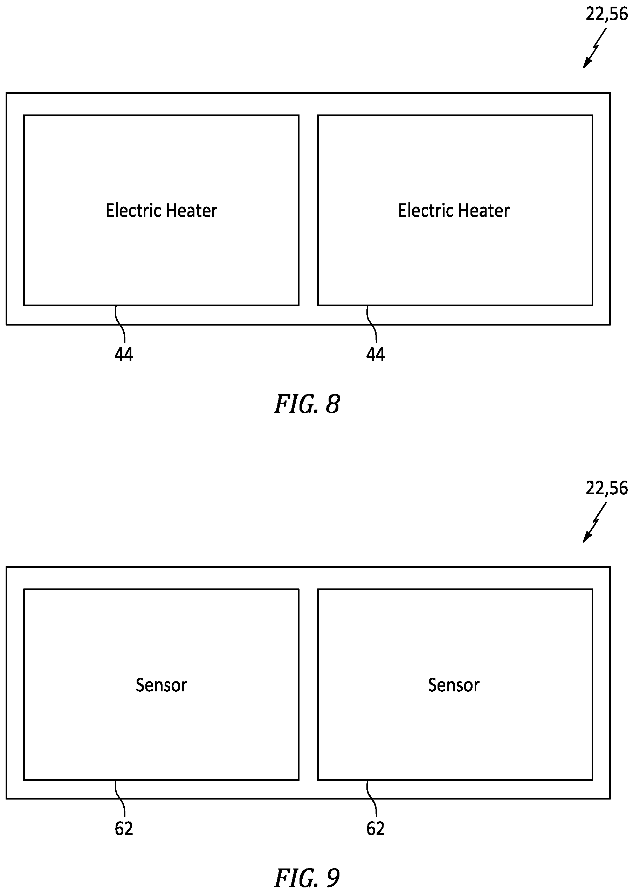

According to the invention, referring to FIG. 8, the aircraft component 22 includes multiple of the internal electric heaters 44. These electric heaters 44 may be operated to heat the surrounding composite preform material to a common (e.g., the same) temperature during the consolidation step 504. Alternatively, the electric heaters 44 may be operated to heat the surrounding composite preform material to different temperatures during the consolidation step 504. The heating during the consolidation step 504 may thereby be tailored to dimensional differences, etc. in the composite preform 56.

In some embodiments, referring to FIG. 9, the consolidation of the composite preform 56 may be monitored using a sensor system with one or more sensors 62. One or more or all of these sensors 62 may be arranged within the composite preform 56. The sensors 62 may thereby be embedded within the cured thermoset material 46 of the aircraft component 22. These sensors 62 may also or alternatively be used to monitor the thermal anti-icing, the aircraft component 22 and/or an environment surrounding the aircraft component 22 during aircraft operation. Examples of the sensors 62 include, but are not limited to, temperature sensors and pressure sensors.

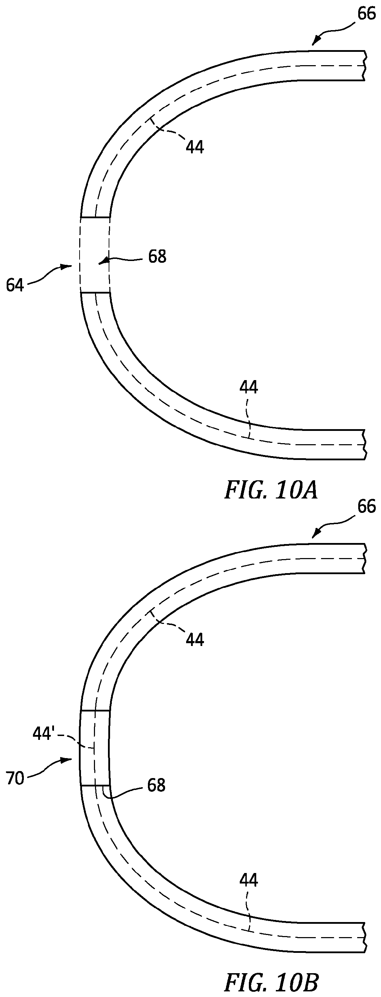

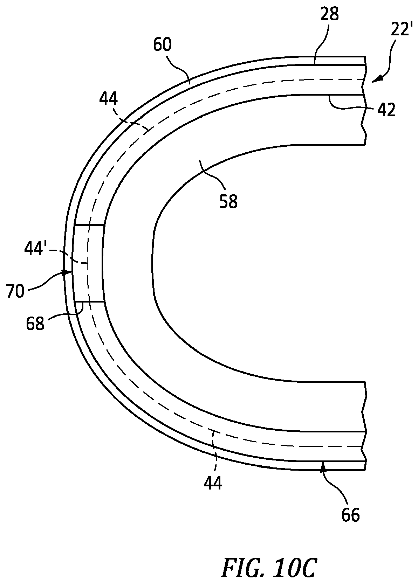

While the heater(s) 44 are described above for forming the aircraft component 22, the heater(s) 44 may also or alternatively be used for repairing the aircraft component 22. For example, referring to FIG. 10A, a damaged portion 64 of the aircraft component 22 may be removed to provide a base member 66 of a future repaired composite aircraft component 22' (see FIG. 10C). This base member 66 includes a void 68 (e.g., a hole, a groove, a notch, a recession, a depression, etc.) at a location of where the damaged portion 64 was removed. Referring to FIG. 10B, a repair member 70 is arranged with the base member 66 to fill, cover and/or otherwise patch the void 68. This repair member 70 may have a similar configuration / makeup as the composite preform 56 described above. The repair member 70 of FIG. 10B, for example, includes fiber-reinforcement and uncured or partially cured thermoset material (e.g., similar to that shown in FIGS. 3A-C); e.g., one or more layers of prepreg. The repair member 70 of FIG. 10B also include at least one electric heater 44' laid up with the prepreg layers (e.g., similar to that shown in FIGS. 3A-C). Referring to FIG. 10C, the repair member 70 may be pressed against the base member 66 using the tooling 58, the vacuum bag 60 and/or other techniques. The thermoset material in the repair member 70 may then be heated by the electric heater(s) 44 in the base member 66 and/or the electric heater 44' in the repair member 70 to cure the thermoset material in the repair member 70 and bond the repair member 70 to the base member 66. The repair member 70 may thereby be consolidated with the base member 66 to form the repaired aircraft component 22'.

In some embodiments, the electric heater 44' in the repair member 70 of the repaired aircraft component 22' may be included as a part of the thermal anti-icing system 24 (see FIG. 1). Of course, in other embodiments, the repair member 70 may be configured without its own integral electric heater.

While the repair member 70 may include the thermoset material, the present disclosure is not limited thereto. For example, in other embodiments, the thermoset material in the repair member 70 may be replaced with thermoplastic material. With such an arrangement, one or more of the electric heaters 44, 44' may be configured to melt the thermoplastic material for bonding to the base member 66.

The member 66 is described above as a part of a damaged aircraft component and the member 70 is described as a repair member for patching the void 68 in the damaged aircraft component. However, it is contemplated that multiple new (e.g., non-damaged) members 66 and 70 may be joined together using the foregoing consolidation and bonding process to form a new (e.g., non-repaired) aircraft component.

While various embodiments of the present invention have been disclosed, it will be apparent to those of ordinary skill in the art that many more embodiments and implementations are possible within the scope of the invention, that is defined by the appended claims. For example, the present invention as described herein includes several aspects and embodiments that include particular features.

## Claims

1. A method, comprising:
providing a composite preform (56) that includes an electric heater (44), a second electric heater (44), fiber-reinforcement (45) and thermoset material (46; 46'); and
consolidating the composite preform (56) to provide a composite aircraft component (22), the consolidating comprising heating the thermoset material (46; 46') using the electric heater (44) and the second electric heater (44) to cure the thermoset material (46; 46'), the electric heater (44), the second electric heater (44) and the fiber-reinforcement (45) embedded within the cured thermoset material (46; 46'), and the electric heater (44) configured as a part of a thermal anti-icing system (24) for melting and/or preventing ice accumulation on an exterior surface (28) of the composite aircraft component (22), and the second electric heater (44) configured as a second part of the thermal anti-icing system (24) for melting and/or preventing ice accumulation on the exterior surface (28) of the composite aircraft component (22);
operating the electric heater (44) and the second electric heater (44) to heat a surrounding composite preform material to a common temperature or to different temperatures during the consolidation of the composite preform (56).

2. The method of claim 1, wherein the consolidating further comprises applying pressure to the composite preform (56) using tooling (58).

3. The method of claim 1 or 2, wherein the consolidating further comprises applying pressure to the composite preform (56) using a vacuum bag (60).

4. The method of any preceding claim, wherein
the providing of the composite preform (56) comprises laying up the electric heater (44) between a first layer and a second layer;
the first layer includes a first portion of the fiber-reinforcement (45) and a first portion of the thermoset material (46; 46'); and
the second layer includes a second portion of the fiber-reinforcement (45) and a second portion of the thermoset material (46; 46').

5. The method of any preceding claim, wherein the electric heater (44) comprises a plurality of electric heating elements (50) embedded within the cured thermoset material (46; 46').

6. The method of claim 5, wherein the electric heating elements (50) are arranged in a grid.

7. The method of any preceding claim, wherein the electric heater (44) comprises a carbon nanotube heater embedded within the cured thermoset material (46; 46').

8. The method of any preceding claim, wherein
the electric heater (44) heats up to a first temperature during the heating of the thermoset material (46; 46'); and
the second electric heater (44) heats up to a second temperature during the heating of the thermoset material (46; 46') that is different than the first temperature.

9. The method of any of claims 1 to 7, wherein the electric heater (44) and the second electric heater (44) heat up to a common temperature during the heating of the thermoset material (46; 46').

10. The method of any preceding claim, further comprising:
monitoring the consolidation of the composite preform (56) using a sensor (62);
the composite preform (56) further including the sensor (62); and
the sensor (62) embedded within the cured thermoset material (46; 46').

11. The method of any preceding claim, wherein
a nacelle inlet structure (30) comprises the composite aircraft component (22); and
the electric heater (44) is located at a leading edge (26) of the nacelle inlet structure (30).

12. The method of any of claims 1 to 10, wherein
an aircraft wing (34) comprises the composite aircraft component (22); and
the electric heater (44) is located at a leading edge (26) of the aircraft wing (34).

13. The method of any of claims 1 to 10, wherein
an aircraft stabilizer (36; 38) comprises the composite aircraft component (22); and
the electric heater (44) is located at a leading edge (26) of the aircraft stabilizer (36; 38).

## Patentansprüche

1. Verfahren, umfassend:
Bereitstellen einer Verbundvorform (56), die eine elektrische Heizung (44), eine zweite elektrische Heizung (44), Faserverstärkung (45) und duroplastisches Material (46; 46') einschließt; und
Konsolidieren der Verbundvorform (56), um eine Verbund-Luftfahrzeugkomponente (22) bereitzustellen, wobei das Konsolidieren Erhitzen des duroplastischen Materials (46; 46') unter Verwendung der elektrischen Heizung (44) und der zweiten elektrischen Heizung (44) umfasst, um das duroplastische Material (46; 46') zu härten, wobei die elektrische Heizung (44), die zweite elektrische Heizung (44) und die Faserverstärkung (45) innerhalb des gehärteten duroplastischen Materials (46; 46') eingebettet sind, und die elektrische Heizung (44) als ein Teil eines thermischen Enteisungssystems (24) zum Schmelzen und/oder Verhindern von Eisansammlung auf einer Außenoberfläche (28) der Verbund-Luftfahrzeugkomponente (22) konfiguriert ist, und die zweite elektrische Heizung (44) als ein zweiter Teil des thermischen Enteisungssystems (24) zum Schmelzen und/oder Verhindern von Eisansammlung auf der Außenoberfläche (28) der Verbund-Luftfahrzeugkomponente (22) konfiguriert ist;
Betreiben der elektrischen Heizung (44) und der zweiten elektrischen Heizung (44), um ein umgebendes Verbundvorformmaterial während der Konsolidierung der Verbundvorform (56) auf eine gemeinsame Temperatur oder auf unterschiedliche Temperaturen zu erhitzen.

2. Verfahren nach Anspruch 1, wobei das Konsolidieren ferner Aufbringen von Druck auf die Verbundvorform (56) unter Verwendung von Werkzeugen (58) umfasst.

3. Verfahren nach Anspruch 1 oder 2, wobei das Konsolidieren ferner Aufbringen von Druck auf die Verbundvorform (56) unter Verwendung eines Vakuumsacks (60) umfasst.

4. Verfahren nach einem der vorhergehenden Ansprüche, wobei
das Bereitstellen der Verbundvorform (56) Auflegen der elektrischen Heizung (44) zwischen eine erste Schicht und eine zweite Schicht umfasst;
die erste Schicht einen ersten Teil der Faserverstärkung (45) und einen ersten Teil des duroplastischen Materials (46; 46') einschließt; und
die zweite Schicht einen zweiten Teil der Faserverstärkung (45) und einen zweiten Teil des duroplastischen Materials (46; 46') einschließt.

5. Verfahren nach einem der vorhergehenden Ansprüche, wobei die elektrische Heizung (44) eine Vielzahl von elektrischen Heizelementen (50) umfasst, die innerhalb des gehärteten duroplastischen Materials (46; 46') eingebettet sind.

6. Verfahren nach Anspruch 5, wobei die elektrischen Heizelemente (50) in einem Gitter angeordnet sind.

7. Verfahren nach einem der vorhergehenden Ansprüche, wobei die elektrische Heizung (44) eine Kohlenstoff-Nanoröhren-Heizung umfasst, die innerhalb des gehärteten duroplastischen Materials (46; 46') eingebettet ist.

8. Verfahren nach einem der vorhergehenden Ansprüche, wobei
sich die elektrische Heizung (44) während des Erhitzens des duroplastischen Materials (46; 46') auf eine erste Temperatur aufheizt; und
sich die zweite elektrische Heizung (44) während des Erhitzens des duroplastischen Materials (46; 46') auf eine zweite Temperatur aufheizt, die sich von der ersten Temperatur unterscheidet.

9. Verfahren nach einem der Ansprüche 1 bis 7, wobei sich die elektrische Heizung (44) und die zweite elektrische Heizung (44) während des Erhitzens des duroplastischen Materials (46; 46') auf eine gemeinsame Temperatur aufheizen.

10. Verfahren nach einem der vorhergehenden Ansprüche, ferner umfassend:
Überwachen der Konsolidierung der Verbundvorform (56) unter Verwendung eines Sensors (62);
wobei die Verbundvorform (56) ferner den Sensor (62) einschließt; und
der Sensor (62) innerhalb des gehärteten duroplastischen Materials (46; 46') eingebettet ist.

11. Verfahren nach einem der vorhergehenden Ansprüche, wobei
eine Gondeleinlassstruktur (30) die Verbund-Luftfahrzeugkomponente (22) umfasst; und
die elektrische Heizung (44) an einer Vorderkante (26) der Gondeleinlassstruktur (30) angeordnet ist.

12. Verfahren nach einem der Ansprüche 1 bis 10, wobei
ein Luftfahrzeugflügel (34) die Verbund-Luftfahrzeugkomponente (22) umfasst; und
die elektrische Heizung (44) an einer Vorderkante (26) des Luftfahrzeugflügels (34) angeordnet ist.

13. Verfahren nach einem der Ansprüche 1 bis 10, wobei
ein Luftfahrzeugstabilisator (36; 38) die Verbund-Luftfahrzeugkomponente (22) umfasst; und
die elektrische Heizung (44) an einer Vorderkante (26) des Luftfahrzeugstabilisators (36; 38) angeordnet ist.

## Revendications

1. Procédé, comprenant :
la fourniture d'une préforme composite (56) comprenant un réchauffeur électrique (44), un second réchauffeur électrique (44), un renfort fibreux (45) et un matériau thermodurcissable (46 ; 46') ; et
la consolidation de la préforme composite (56) pour fournir un composant d'aéronef composite (22), la consolidation comprenant le chauffage du matériau thermodurcissable (46 ; 46') au moyen du réchauffeur électrique (44) et du second réchauffeur électrique (44) afin de durcir le matériau thermodurcissable (46 ; 46'), le réchauffeur électrique (44), le second réchauffeur électrique (44) et le renfort fibreux (45) intégrés dans le matériau thermodurcissable (46 ; 46') durci, et le rconfigurééchauffeur électrique (44) configuré en tant que partie d'un système thermique antigivrage (24) pour faire fondre et/ou empêcher l'accumulation de glace sur une surface extérieure (28) du composant d'aéronef composite (22), et le second réchauffeur électrique (44) configuré en tant que seconde partie du système thermique antigivrage (24) pour faire fondre et/ou empêcher l'accumulation de glace sur la surface extérieure (28) du composant d'aéronef composite (22) ;
le fonctionnement du réchauffeur électrique (44) et du second réchauffeur électrique (44) pour chauffer un matériau environnant de la préforme composite à une température commune ou à des températures différentes pendant la consolidation de la préforme composite (56).

2. Procédé selon la revendication 1, dans lequel la consolidation comprend en outre l'application d'une pression à la préforme composite (56) au moyen d'un outillage (58).

3. Procédé selon la revendication 1 ou 2, dans lequel la consolidation comprend en outre l'application d'une pression à la préforme composite (56) au moyen d'un sac à vide (60).

4. Procédé selon l'une quelconque des revendications précédentes, dans lequel
la fourniture de la préforme composite (56) comprend la stratification du réchauffeur électrique (44) entre une première couche et une deuxième couche ;
la première couche comprend une première portion du renfort fibreux (45) et une première portion du matériau thermodurcissable (46 ; 46') ; et
la deuxième couche comprend une deuxième portion du renfort fibreux (45) et une deuxième portion du matériau thermodurcissable (46 ; 46').

5. Procédé selon l'une quelconque des revendications précédentes, dans lequel le réchauffeur électrique (44) comprend une pluralité d'éléments chauffants électriques (50) intégrés dans le matériau thermodurcissable (46 ; 46') durci.

6. Procédé selon la revendication 5, dans lequel les éléments chauffants électriques (50) sont disposés en grille.

7. Procédé selon l'une quelconque des revendications précédentes, dans lequel le réchauffeur électrique (44) comprend un réchauffeur à nanotubes de carbone intégré dans le matériau thermodurcissable (46 ; 46') durci.

8. Procédé selon l'une quelconque des revendications précédentes, dans lequel
le réchauffeur électrique (44) chauffe jusqu'à une première température pendant le chauffage du matériau thermodurcissable (46; 46') ; et
le second réchauffeur électrique (44) chauffe jusqu'à une deuxième température pendant le chauffage du matériau thermodurcissable (46 ; 46') qui est différente de la première température.

9. Procédé selon l'une quelconque des revendications 1 à 7, dans lequel le réchauffeur électrique (44) et le second réchauffeur électrique (44) chauffent jusqu'à une température commune pendant le chauffage du matériau thermodurcissable (46 ; 46').

10. Procédé selon l'une quelconque des revendications précédentes, comprenant en outre :
la surveillance de la consolidation de la préforme composite (56) au moyen d'un capteur (62) ;
la préforme composite (56) comprenant en outre le capteur (62) ; et
le capteur (62) intégré dans le matériau thermodurcissable (46 ; 46') durci.

11. Procédé selon l'une quelconque des revendications précédentes, dans lequel
une structure d'entrée de nacelle (30) comprend le composant d'aéronef composite (22) ; et
le réchauffeur électrique (44) est situé au niveau d'un bord d'attaque (26) de la structure d'entrée de nacelle (30).

12. Procédé selon l'une quelconque des revendications 1 à 10, dans lequel
une aile d'aéronef (34) comprend le composant d'aéronef composite (22) ; et
le réchauffeur électrique (44) est situé au niveau d'un bord d'attaque (26) de l'aile d'aéronef (34).

13. Procédé selon l'une quelconque des revendications 1 à 10, dans lequel
un stabilisateur d'aéronef (36 ; 38) comprend le composant d'aéronef composite (22) ; et
le réchauffeur électrique (44) est situé au niveau d'un bord d'attaque (26) du stabilisateur d'aéronef (36 ; 38).
